# EUROPEAN PATENT SPECIFICATION

(11) **EP 3 436 226 B1**
(45) Date of publication and mention of the grant of the patent: **08.01.2020**
(21) Application number: 17713028.3
(22) Date of filing: 28.03.2017
(51) Int. Cl.: B29B 17/02, B29K 105/06, B03B 9/06, B03B 5/02

(54) **METHOD FOR WASHING AND SEPARATING PIECES OF PLASTICS MATERIAL, AND WASHING AND SEPARATING GROUP FOR PIECES OF PLASTICS**
VERFAHREN ZUM WASCHEN UND TRENNEN VON KUNSTSTOFFTEILEN SOWIE WASCH- UND TRENNGRUPPE FÜR KUNSTSTOFFTEILE
PROCÉDÉ DE LAVAGE ET DE SÉPARATION DE MORCEAUX DE MATIÈRES PLASTIQUES, ET GROUPE DE LAVAGE ET DE SÉPARATION POUR MORCEAUX DE MATIÈRES PLASTIQUES

(30) Priority: 29.03.2016 IT UA20162088
(43) Date of publication of application: 06.02.2019
(73) Proprietor: Previero N. S.r.l., 20851 Lissone, Milan (IT)
(72) Inventor: PREVIERO, Flavio, 20851 Lissone Milan (IT)
(74) Representative: Candito, Rocco
(86) International application number: PCT/EP2017/057271
(87) International publication number: WO 2017/167725

(56) References cited:
- EP-A1- 2 200 761
- DE-A1- 2 416 573
- DE-A1- 3 543 892
- US-A- 5 948 276

## Description

### BACKGROUND OF THE INVENTION

This invention relates to a method and to a group for washing and separating plastics material - coming from domestic and/or industrial waste that has been shredded or reduced into pieces - from various types of contaminants so as to enable these plastic materials to be reused as regenerated material. In particular, pieces of plastics to be processed can come, for example, from containers, bottles and films made of plastics.

### PRIOR ART

In the field of recovering plastics coming from solid waste, complex systems are used that involve various pre-washing, washing and treatment steps of the material that has been suitably shredded or reduced into pieces of small dimensions.

In particular, if the material to be treated includes bottles and/or containers made of plastics, a first pre-washing step is performed in specially dedicated apparatuses, comprising for example rotating cylinders, in which the bottles and/or the containers are subjected to a pre-washing action to eliminate prevalently the biggest contaminations such as labels, caps and part of the dirt that adhered to the bottles during collecting and storage. Subsequently, the containers/bottles are sent to a shredding mill to be reduced into small pieces. The shredded plastics are then subsequently subjected to one or several more thorough washing steps, in specific apparatuses in which the pieces of material remain the time required to complete the washing and rinsing operations. It is important to ensure an effective washing action of the pieces of plastics, inasmuch as the presence of residual contaminant substances may affect and compromise the subsequent use of the recovered material.

It is known that in the processes of washing plastics in recovery plants, in addition to the chemical action of the detergent substances contained in the washing fluid and to the heat treatment, it is further necessary to resort to an energetic mechanical action to create strong turbulence in the washing fluid and rubbing of the material. For this purpose, washing containers are used that are provided internally with blade stirrers that generate turbulence and stirring in the washing fluid to wash and separate the pieces of plastics from the contaminants.

It is important for the quantity of plastics poured into the washing container not to exceed a set level of concentration with respect to the volume of fluid contained, to avoid rapid contamination of the washing fluid with resulting lowering of washing efficacy. This represents a first limit with respect to the possibility of exploiting to the full the potential work capacity of the recovery plant.

The plastics processed in the washing container require a further washing treatment. Thus these plastics exiting from the washing container together with the washing fluid are sent to a washing unit of centrifugal type that is placed serially downstream of the washing container, along the process and recovery line. All the processed material thus progressively abandons the washing container to traverse the centrifugal washing unit. In the centrifugal washing unit the plastics are then separated from the washing fluid containing the contaminants. The flowrate of the washing fluid containing the plastics to be processed further exiting from the washing container must thus be adjusted and limited on the basis of the maximum operating capacity of the centrifugal washing unit.

Other types of plants, like that known, for example, from US5948276, also comprise a hydrocyclone unit located downstream of the container provided with a stirrer and upstream of the centrifugal separating unit. In the hydrocyclone unit, the "cyclone" effect generated by the vortex causes small pieces of plastics to separate from the heavy contaminant, which through gravity precipitates to the bottom of the tank, from which it is periodically removed through a valve device.

The whirling flow of the washing fluid forces the pieces of plastics to rise to the upper edge of the tank and exit with the washing fluid simply through overflowing to be then sent to the centrifugal unit further downstream.

The whirling motion of the fluid in the hydrocyclone unit does not permit effective washing of the plastics and a complete detachment of the contaminant because it is limited to only causing a separating effect, fluid-dynamically, of the heavier fractions of material from the lighter fractions, exploiting the different degree of floating.

A gentle washing action caused by a simple whirling motion does not enable the contaminant to be detached from the pieces of plastics.

In other words, there is no mechanical action to detach the contaminants adhering to the pieces of plastics. Thus once again it is necessary to resort to a further washing unit, in this case the centrifugal unit, which is located serially and further downstream, to treat all the product that has been processed by the stirrer and by the hydrocyclone unit.

### OBJECTS OF THE INVENTION

An object of the present invention is to improve the current washing and separating systems for plastics material of any type, whether they come from containers, bottles or films of plastics reduced into pieces.

Another object is to provide a method and a washing and separating group that is able to ensure an effective, efficient and rapid washing action.

A further object is to provide a method and a washing and separating group that entails a significant plant and functional simplification with respect to current systems and that is also able to ensure significant energy savings.

### SHORT DESCRIPTION OF THE INVENTION

These and further objects and advantages are achievable by a method according to claim 1, and a washing and separating group for plastics according to claim 10.

### SHORT DESCRIPTION OF THE DRAWINGS

These and further characteristics of the method and of the washing and separating group will be clearer from the following description, with reference to the drawings, in which:
Figures 1 and 2 are two different perspective views of a washing and separating group according to the present invention;
Figure 3 is a side view of the washing and separating group of the invention;
Figure 4 is a vertical cross section according to line IV-IV of figure 3;
Figures 5 and 7 are different views of the washing and separating group;
Figure 6 is a cross section according to the line VI-VI of figure 5;
Figure 8 is a horizontal cross section according to the line VIII-VIII of fig. 7;
Figure 9 is a top view of the washing and separating group;
Figure 10 is a simplified diagram that shows the operation of the washing and separating group of the invention;
Figure 11 is a block diagram relating to a method according to the invention for washing and separating plastics;
Figure 12 shows a possible embodiment of the washing and separating method according to the invention;
Figure 13 shows schematically a possible operating mode of several washing groups according to the invention that are arranged in series one after the other to operate in "continuous" mode;
Figure 14 shows schematically another possible operating mode of several washing groups according to the invention arranged mutually parallel to operate in "batch" mode.

### DETAILED DESCRIPTION OF THE INVENTION

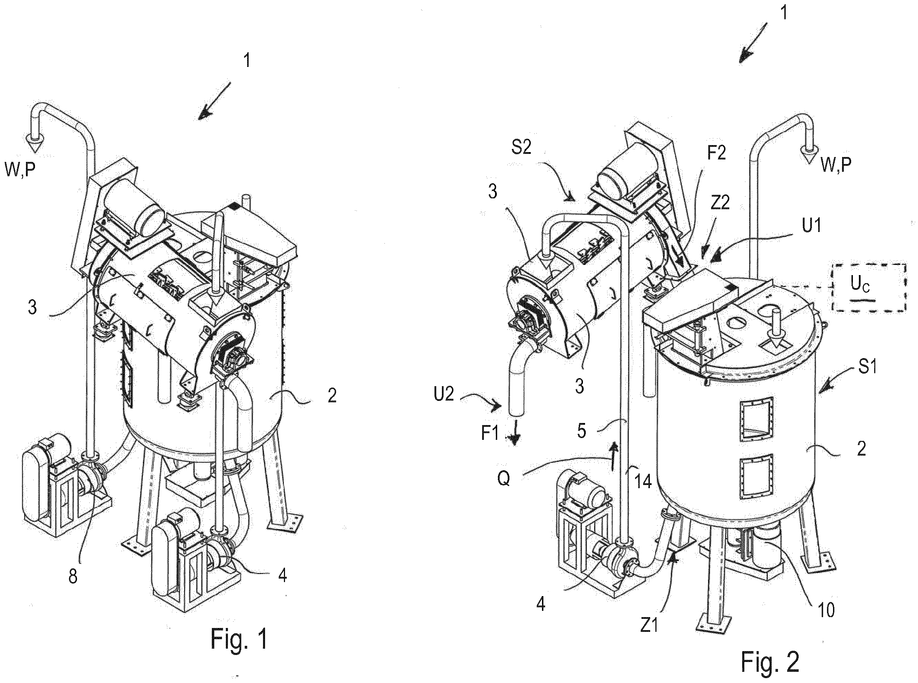

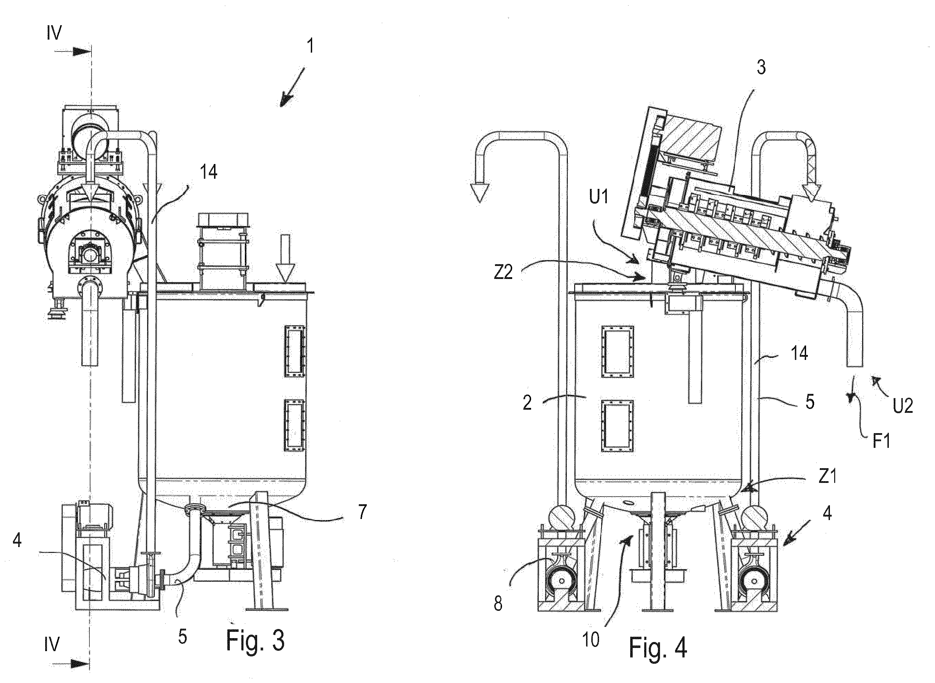

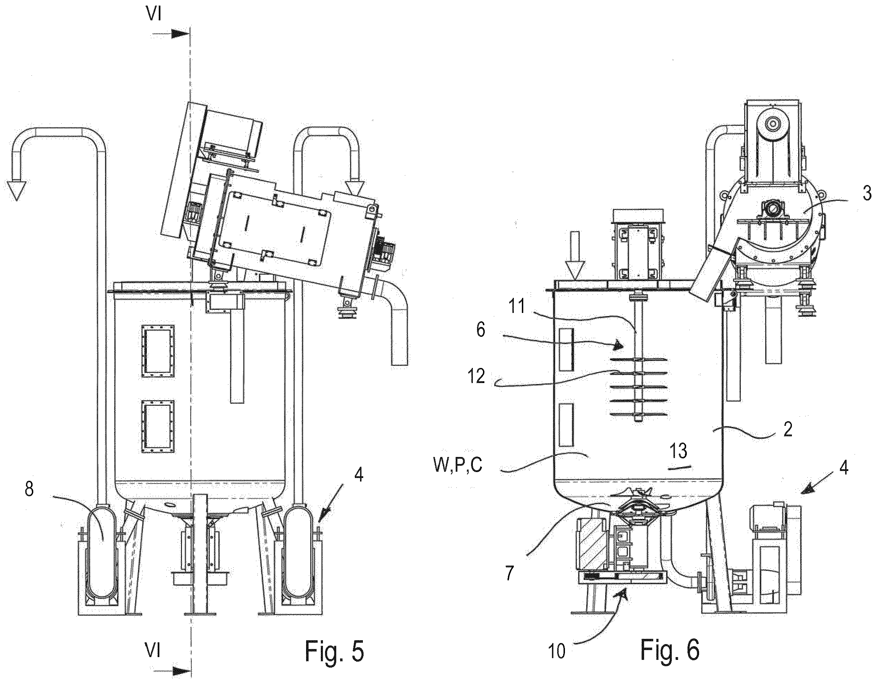

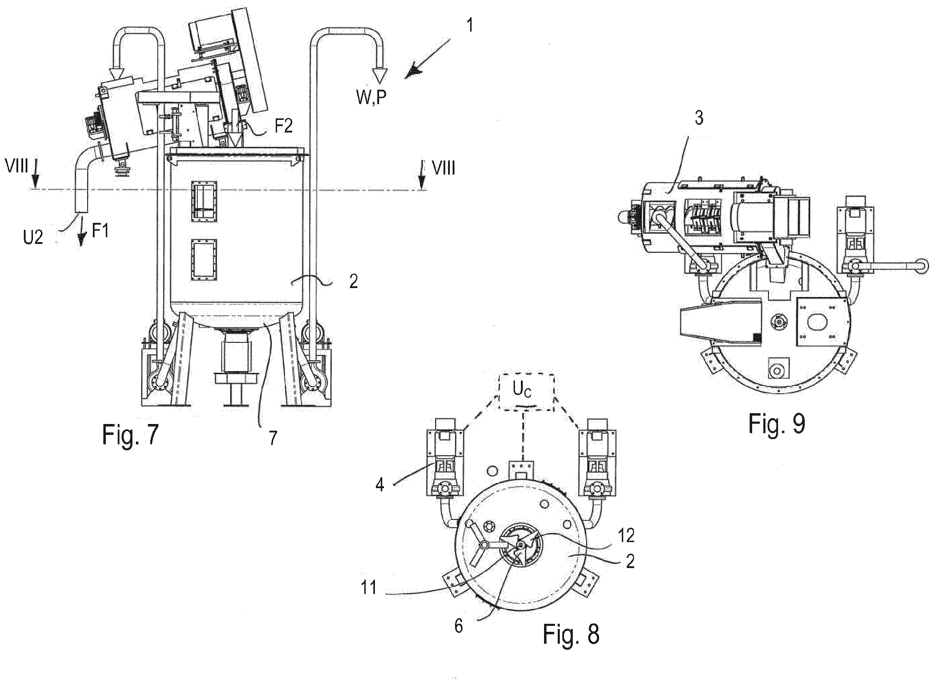

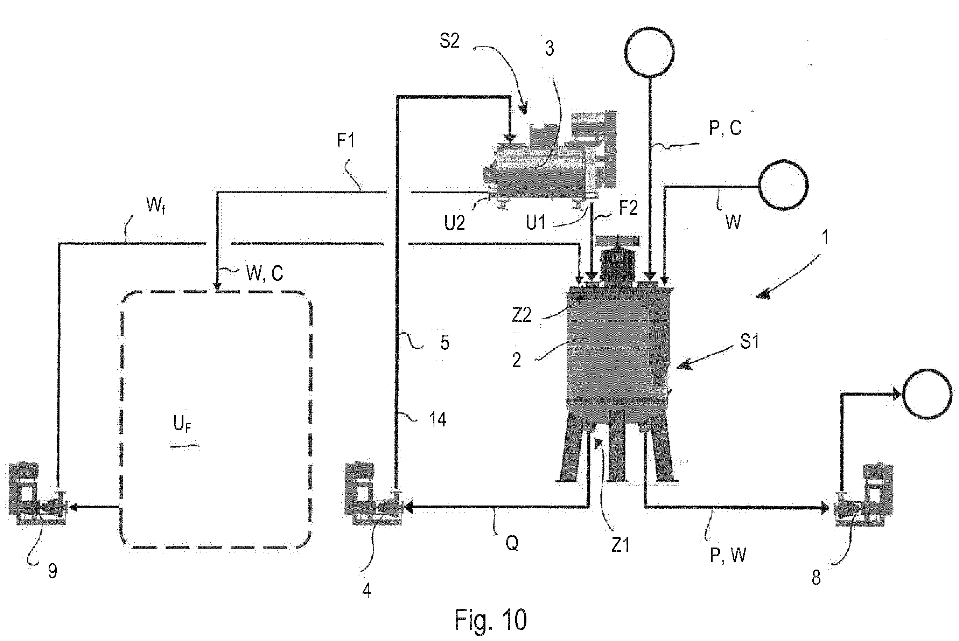

With reference to Figures 1 to 10, there is disclosed a washing and separating group 1 for plastics material P, such as pieces of plastics coming from containers or bottles, and/or films made of plastics. The washing and separating group 1 comprises a washing container 2 arranged for receiving an incoming washing fluid W and pieces of plastics material P to which contaminating material C to be eliminated is detached. Inside the washing container 2, stirring means 6 is provided that is arranged for generating in the washing fluid W a turbulent stirring action for separating through mechanical action the contaminating material C adhering to the plastics P.

The stirring means 6 comprises a rotation shaft 11 that extends longitudinally inside the cavity of the washing container 2, and a plurality of distributed blades 12 that protrude transversely from the aforesaid rotation shaft 11.

The mechanical action that the blades 12 exert directly on the pieces of plastics P and the turbulent stirring action of the fluid generated by the blades 12 fitted to the rotation shaft 11 produce a shaking action of the pieces of plastics P that promotes effectively the separation from the latter of the contaminants bodies C. In the tank 13 a first washing step of the plastics then occurs with a first separation S1 of contaminants C from the pieces of plastics.

The washing group 1 comprises a closed recirculating circuit 5, configured for removing, from the tank 13 of the washing container 2, a quantity Q consisting of washing fluid containing plastics material P and contaminant C.

In the washing group 1 a centrifugal separating unit 3 is included, provided with a rotor, arranged along the recirculating circuit 5 and suitable for removing, through mechanical action, the contaminating material C from the plastics P and dividing the aforesaid quantity Q into two fractions F1, F2. Precisely, the centrifugal separating unit 3 is configured for receiving the incoming quantity Q and separating, by the action of its internal rotating rotor, a first fraction F1 consisting of washing fluid W and contaminants C, from a second fraction F2 comprising substantially plastics P. The centrifugal separating unit 3 comprises a first outlet U1 arranged for returning to inside the washing container 2 the second fraction F2 to subject the plastics P contained therein to a further turbulent stirring action in order to separate further from the pieces of plastics P any possible contaminant C still adhering thereto.

The centrifugal separating unit 3 comprises a second outlet U2 arranged for evacuating the first fraction F1 of washing fluid W and contaminants C to a filtering unit U_{F}.

Precisely, the recirculating circuit 5 comprises a first pump unit 4 suitable for removing, from a first zone Z1 of the washing container 2, washing fluid W containing plastics P and possible contaminant C to pump said washing fluid W combined with plastics, along a delivery conduit 14 to the centrifugal separating unit 3.

The first outlet U1 of the centrifugal separating unit 3 leads into the tank 13 of the washing container 2 in a second zone Z2 placed at a greater height and spaced away from the aforesaid first zone Z1.

Providing a certain distance of the first zone Z1 (i.e. the removing zone) from the second zone Z2 (i.e. the zone of returning to the tank 13), in synergy with the turbulence and stirring induced by the stirrer 6, means that substantially all the contents of the tank 13 are taken progressively from the first pump unit 4 to be processed by the centrifugal separating unit 3, thus avoiding phenomena of preferential recirculating of only a part of the contents of the tank 13.

Thus statistically all the contents (W, P, C) of the tank 13 undergo recirculating and are processed by the centrifugal unit 3 which, through the mechanical action caused by its rotor, causes a further detachment then a second separation S2 of contaminating material C from the plastics P.

The centrifugal unit 3 thus operates to centrifuge material that is continuously recirculated inside the washing container 2, whilst simultaneously the stirrer 6 is in operation.

In the washing and separating group 1, the centrifugal unit 3, in addition to the mechanical action of detaching the contaminants C, sends the first fraction F1 (washing fluid W and contaminants C) to the filtering unit Up, and returns the second fraction F2, substantially containing pieces of plastics P, to inside the tank 13.

The washing fluid W, containing contaminants C, is treated in the filtering unit U_{F} and once filtered it is pumped, by a suitable pump 9, inside the washing container 2.

This configuration, advantageously, enables a high degree of cleanliness of the washing fluid W to be maintained that is returned to the washing container 2, thus improving the efficiency of the washing and separating treatment of the plastics P. There is thus also a saving of water used for the process.

The washing and separating group 1 further comprises a second pump unit 8 for extracting from the washing container 2 the plastics P, together with washing fluid W, at the end of a washing and separating cycle to send said plastics P to a subsequent treatment unit of the process line.

The washing and separating group 1 further includes valve means 10 provided near a bottom zone 7 of the washing container 2 and suitable for periodically evacuating the heavier materials, for example stones or other bodies to be eliminated that precipitate, accumulating progressively on the bottom 7.

The periodical removal of the heavy contaminants that settle on the bottom 7 of the washing container 2 advantageously combats the polluting effect of the fluid W, thus contributing to preserving significant efficacy of the washing bath.

In particular, a double valve system 10 can be provided, i.e. a pair of valves (for example of the solenoid valve type) arranged in a conduit below one another and each driven by an actuator.

Selective opening and closing of the two valves enables the heavy sediments - that accumulate on the bottom 7 - to be discharged periodically, preventing the escape of the washing fluid W.

More precisely, the bottom 7 of the washing container 2 is of approximately conical shape, concave towards the inside of the container 2, or has a shape that is such as to promote a concentration or accumulation of the heavy contaminants - that settle - towards the central zone of the bottom 7, at which central zone the evacuation valve means 10 is provided. Further, the removal zone Z1 - from which the recirculating circuit 5 starts - is decentred, or anyway spaced away from the bottom zone 7 to which the evacuation valve means 10 is connected, and this, advantageously, reduces the flow, to the recirculating circuit 5, of the heavy contaminants precipitated to the bottom 7. In other words, the sucking action of the first recirculating pump unit 4 mainly makes the quantity Q of fluid and plastics P flow to the centrifugal unit 3 but without also circulating the heavy contaminants C that have already settled in the centre of the bottom zone 7 and which can on the other hand be evacuated periodically directly by the valve means 10.

The centrifugal unit 3 placed along the recirculating circuit 5 that leads away from and closes on the container 2 does not place any limit on the operation and hourly productive capacity of the washing container 2 and thus on the volumes of material that can transit to the washing group 1 over the unit of time.

This is thus a significant difference from some known systems having a centrifuge located downstream and serially in relation to a stirrer, where the flowrate of the washing fluid containing the plastics exiting from the washing container and directed to the centrifuge must be limited according to the operating capacity thereof.

A control unit U_{C} is provided for driving and controlling the different parts of the washing group 1. In particular, the control unit Uc is configured and programmed for running the unit 1 according to two possible operating modes: a "batch" operating mode and a "continuous" operating mode.

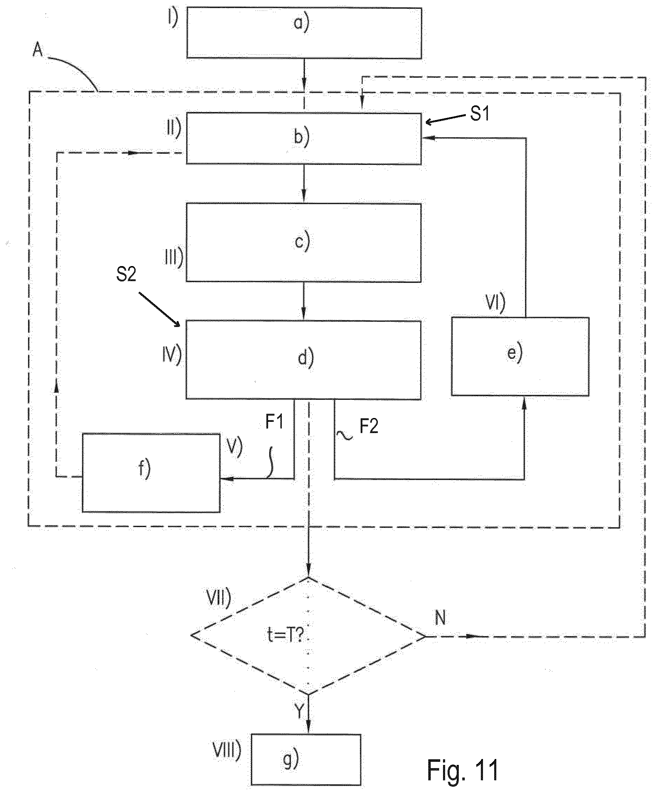

With the help of the block diagram of Figure 11, the washing and separating method according to the invention is disclosed, which is actuated by the washing and separating group 1 that has just been disclosed.

The plastics P coming from the pre-washing and shredding of post-consumption waste plastics reduced into small pieces (dimensions from a few mm to a few cm) and containing contaminants C, are loaded together with a given quantity of washing fluid W, such as water with possible additives, inside the washing container 2 (block I), step a) of the method).

Inside the washing container 2 the stirring step b) (block II) occurs): the pieces of plastics P and the contaminants C are subjected to intense turbulence and stirring that facilitate detaching of the contaminants C. In the container 2 a first separation S1 of contaminants C from the plastics P occurs.

During washing, the heavy contaminants bodies precipitate by gravity onto the bottom 7 of the container 2, from which they can be periodically evacuated by driving the appropriate valve system 10.

Whilst the aforesaid stirring is in progress in the container 2, the continuous removal step C) (block III) also occurs, via the pump unit 4, of a flow of fluid W and plastics P containing contaminants C which are sent to the centrifugal separating unit 3.

In the centrifugal separating unit 3, the centrifugation and friction step d) (block IV) occurs, owing to the action of the rotor, which causes a second separation S2, through mechanical action, of contaminating material C from the plastics P to which it adheres. Simultaneously, the quantity Q that has entered the centrifugal unit 3 is divided into a first fraction F1 consisting of washing fluid W and contaminants C, and a second fraction F2 comprising substantially plastics P, from which a good part of the contaminating material C was removed but which can have undesired residues to be eliminated.

The first fraction F1 is sent to the filtering unit Up for the filtering step f) (block V)). The filtered washing fluid W_{f} is pumped by the pump 9 to be again delivered into the washing container 2.

The second fraction F2, exiting from the centrifugal separating unit 3, is again discharged inside the container 2 (step e), block VI) where the plastics P are subjected to a new turbulent stirring action that is such as to further separate any possible contaminant C still adhering thereto.

As the washing fluid W_{f}, suitably filtered by the unit Up, is continuously supplied to the washing container 2, and the contaminants C progressively removed owing to the centrifugal unit 3 and retained owing to the filtering unit Up, there is rapid and effective decontamination of the plastics P being washed in the container 2. This, unlike prior-art stirrer systems, enables a greater quantity of plastics P to be processed to be introduced into the container 2, i.e. enables operation with greater concentrations of plastics P in the washing fluid W, as immediately rapid removal is obtained of contaminants C initially present in the cavity 13.

Owing to the configuration of the washing group 1, the plastics P are thus repeatedly subjected to two different sequential mechanical washing and separating actions, i.e. to the combined and synergetic action performed by the blade stirrer 6 and by the centrifugal separating unit 3. In one batch operating mode, the steps disclosed above (from b) to f)) follow over an interval of time T that is sufficient to achieve the desired degree of purity and decontamination (block VII).

At this point, the second pump unit 8 is driven, to extract (step g), block VIII) the plastics P and washing fluid W from the washing container 2 to send the plastics P and washing fluid W to a subsequent treatment unit of the process line.

It is clear that if high levels of purity and decontamination are required, the procedure is followed with the washing group 1 operating in "batch" mode for the time T requested.

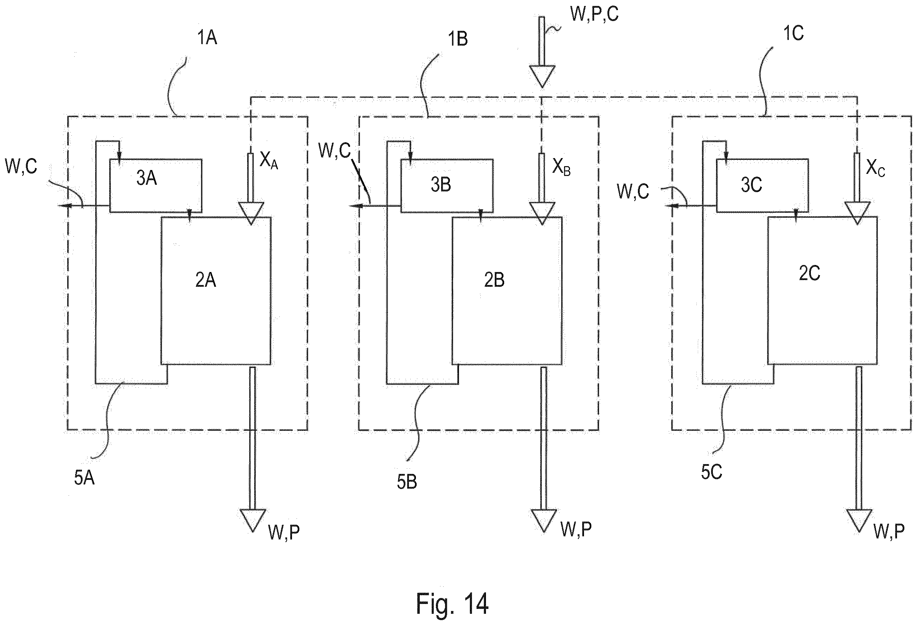

It is possible to provide a plurality of washing groups disclosed above that are arranged for operating in parallel way in "batch" mode, as shown in Figure 14.

As shown by way of example, several washing groups are provided, in this case three washing groups 1A, 1B, 1C (but a different number can be provided, depending on specific needs) to be supplied separately, in "batch" mode, with respective quantities X_{A}, X_{B}, X_{C} of contaminated plastics and washing fluid W. The washing and separating cycle of the aforesaid respective quantities X_{A}, X_{B}, X_{C} of plastics is then run simultaneously in parallel; once the aforesaid quantities of plastics have been treated, they are extracted from the respective washing containers 2A, 2B, 2C.

In figure 14, the same parts associated with the respective washing groups 1A, 1B, 1C, are indicated by the same reference mark to which, however, the letter "A", "B" or "C" is added, depending on the respective group to which they are assigned.

In another possible operating mode, the washing group 1 can perform a control "continuous" washing and separating process (in this case control block VII) is dashed to indicate the absence thereof). In other words, contaminated plastics P, and washing fluid W are supplied constantly, i.e. continuously to inside the container 2, and also the step of extracting the processed product from the container 2 of the product is constant and continuous.

Using only one washing group 1 operating "continuously" has the advantage of processing significant quantities of contaminated plastics P over the unit of time, where maintaining maximum levels of purity and decontamination was superfluous; these maximum levels of purity and decontamination can on the other hand be achieved easily in "batch" operating mode.

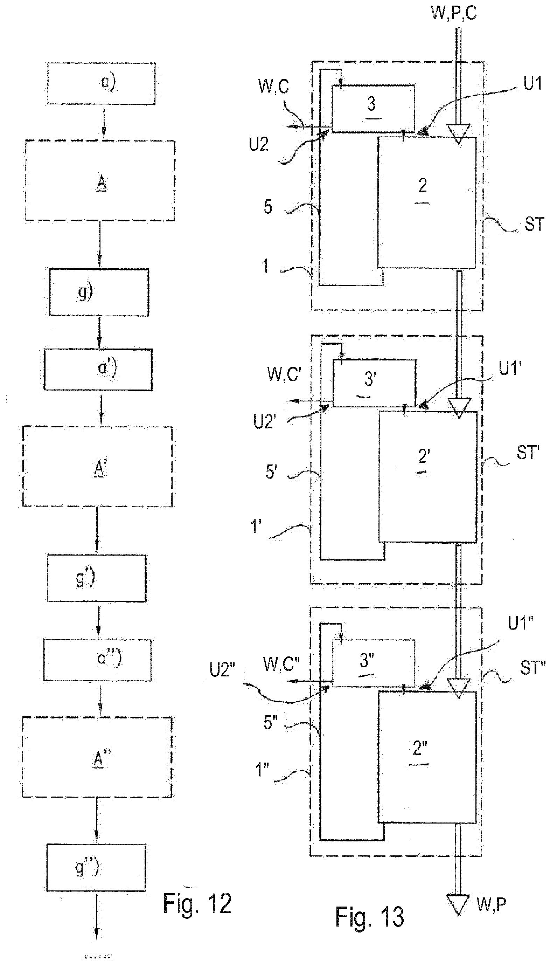

In "continuous" operating mode on the other hand, the use of several washing groups placed serially in relation to one another can be very useful, as shown in Figure 13, and the operation of which is shown schematically in Figure 12. In this case, to the advantage of the operating simplicity associated with "continuous" operation, the further advantage is added of obtaining excellent levels of purity and decontamination of the treated plastics P.

In particular, figure 13 shows a plant comprising, by way of non-limiting example, three (but they could be a different number, according to the needs of the case) washing groups 1, 1', 1" arranged in series to operate "in cascade" mode.

The first washing group 1, which defines a first treatment stage ST, receives the washing fluid W with the contaminated plastics P, to be processed in "continuous" mode.

The washing fluid W together with the plastics P contained in the washing container 2 is progressively extracted, by the corresponding pump unit, to be supplied to the second washing unit 1' located downstream and defining a second treatment stage ST'.

Once again, the plastics P dispersed in the washing fluid W are processed continuously by the second washing unit 1' and progressively transferred to the third washing group 1" defining a third treatment stage ST".

The plastics P exiting the third washing group 1" can be sent to a further treatment unit of the recovery line.

There is thus a continuous washing operation and multiple separation distinguished by significant running simplicity and at the same time the ability to provide surprisingly high levels of purity of the treated material P.

From what has been disclosed and shown in the drawings, it is clear that the method and the washing group according to the invention successfully achieve the preset objects.

The method and the apparatus disclosed above enable high levels of purity to be achieved easily in the recovered plastics in reduced processing times, owing to the immediate continuous removal of the contaminants from the washing container 2, and owing to the combined and synergic mechanical action of the stirrer 6 and of the centrifugal unit 3. Further, consumption of washing water W is minimised, owing to the system for filtering and recovering contaminated water (circuit with filtering unit U_{F}).

Owing to the limited use of water, additives and electric power by virtue of the increased separating efficiency implemented by the group 1 and method of the invention, significant financial advantages are thus achieved.

The object is thus achieved of providing a solution that is functionally and constructively simple, but able to reduce the general process cost, and to assure very high efficiency in separating contaminants from the plastics to be recycled.

It is understood that what has been said and shown with reference to the attached drawings has been done merely by way of illustration of the general features of the method, of the washing and separating group and of the plant defined by several washing groups; accordingly, other modifications or variants can be made to the method, to the entire apparatus or parts thereof without thereby falling outside the scope of the claims. In particular, the geometrical conformation, dimensions, position and materials that compose one or more parts of the washing group can be chosen and/or suitably optimised on the basis of specific needs of use and materials to be processed.

## Claims

1. Method for washing and separating pieces of a plastics material (P) - coming from containers, bottles, films of plastics - from contaminating material (C), comprising the steps of:
**a.** supplying the pieces of plastics material (P) with the contaminating material (C) and a washing fluid (W) in a washing container (2);
**b.** driving a blade stirrer (6) rotating in said washing container (2), for generating in the washing fluid (W) a turbulent stirring action to achieve a first separation (S1), through mechanical action, of the contaminating material (C) from the plastics material (P),
**c.** removing from said washing container (2) a quantity (Q) of washing fluid (W) containing plastics material (P) and contaminant (C) to send said quantity (Q) to a centrifugal separating unit (3) provided with a rotor, and
**d.** subjecting said quantity (Q), by said rotor, to a centrifugal mechanical action to achieve a second separation (S2), through mechanical action, of contaminating material (C) from said plastics material (P), and to separate a first fraction (F1) consisting of washing fluid and contaminants, from a second fraction (F2) comprising substantially plastics material (P), and
**e.** returning inside said washing container (2) said second fraction (F2) to subject said plastics material (P) to a further turbulent stirring action such as to further separate any possible contaminant still sticking to the plastics, and
**f.** evacuating said first fraction (F1) of washing fluid and contaminants (C) to subject said first fraction (F1) of washing fluid and contaminants (C) to a filtering treatment. and
**f'**. periodically evacuating from said washing container (2) a fraction of heavy contaminants to be eliminated that settle on a bottom (7) of said washing container (2).

2. Method according to claim 1, wherein said removing step c) comprises pumping, by a first pump unit (4), said quantity (Q) along a closed recirculating circuit (5), that starts from a first zone (Z1) of said washing container (2) and extends until it returns to a second zone (Z2) in said washing container (2).

3. Method according to claim 1 or 2, wherein said step c) of pumping and recirculating plastics material (P) inside said washing container (2) occurs constantly in a continuous mode during the washing and separating cycle.

4. Method according to any preceding claim, wherein the washing fluid (W), obtained from the filtering treatment of said first fraction (F1), is returned to said washing container (2).

5. Method according to any preceding claim, wherein said supplying step a) occurs in "batch" mode, by introducing a set quantity of plastics material to be processed, and wherein said steps from b) to f) are performed continuously for a set period of time (T) set according to the degree of purity and decontamination of the plastics material (P) that it is desired to obtain.

6. Method according to claim 5, wherein after said set period of time (T) there is provided g) extracting the plastics material (P) and washing fluid (W) by a second pump unit (8) from said washing container (2) and sending said washing fluid (W) and plastics material (P) to a subsequent treatment unit of the process line.

7. Method according to any preceding claim, wherein a plurality of washing groups (1A, 1B, 1C, ..IN) is provided to be supplied separately, in "batch" mode, with respective quantities of contaminated plastics material and washing fluid, and simultaneously performing the washing and separating cycles in parallel of said respective quantities of plastics material.

8. Method according to any one of claims 1 to 4, wherein said supplying step a) occurs in "continuous" mode, introducing constantly a flow of plastics material to be processed and washing fluid, performing continuously said steps from b) to f), and extracting continuously, by a second pump unit (8), the plastics material (P) and washing fluid (W) from said washing container (2) to send the plastics material (P) and washing fluid (W) to a subsequent treatment unit of the process line.

9. Method according to claim 8, wherein there is provided arranging in series a plurality of washing groups (1, 1', 1",..) operating in "continuous" mode, wherein the washing fluid (W) together with the processed plastics material (P) exiting a washing group, flow into a further washing group located further downstream, and so on, such as to subject said plastics material (P) to several washing and separating stages (ST, ST', ST") placed in a cascade.

10. Washing and separating group (1) for pieces of plastics coming from containers, bottles and films of plastics, comprising:
- a washing container (2) suitable for receiving pieces of plastics material (P) with contaminating material (C) and a washing fluid (W),
- stirring means (6) arranged in said washing container(2) and suitable for generating in the washing fluid (W) a turbulent stirring action for separating through mechanical action the contaminating material (C) from said plastics material (P),
- a recirculating circuit (5) configured for removing, from said washing container (2), a quantity (Q) of washing fluid containing plastics material (P) and contaminant (C), and
- a centrifugal separating unit (3) provided with a rotor, arranged along said recirculating circuit (5) and suitable for removing, through mechanical action by said rotor, the contaminating material (C) from the plastics material (P) and separating a first fraction (F1) composed of washing fluid (W) and contaminants (C), from a second fraction (F2) comprising substantially plastics material (P),
wherein
said centrifugal separating unit (3) comprises a first outlet (U1) arranged for returning inside said washing container (2) said second fraction (F2) to subject said plastics material (P) to a further turbulent stirring action such as to further separate from the plastics material (P) any possible contaminant (C) still adhering thereto,
- said centrifugal separating unit (3) comprising a second outlet (U2) arranged for evacuating said first fraction (F1) of washing fluid (W) and contaminants (C) to a filtering unit (U_{F}),
- valve means (10) being provided near a bottom zone (7) of said washing container (2) arranged for periodically evacuating the heavier contaminants to be eliminated that settle in said bottom zone (7).

11. Washing and separating group for plastics according to claim 10, comprising a first pump unit (4) suitable for removing, from a first zone (Z1) of said washing container (2), washing fluid (W) combined with plastics material (P) and possible contaminant (C) to pump said washing fluid (W) combined with plastics material, in said closed recirculating circuit (5), to said centrifugal separating unit (3).

12. Washing and separating group according to claim 11, wherein said first outlet (U1) of said centrifugal separating unit (3) leads into said washing container (2) in a second zone (Z2) spaced away said first zone (Z1) and placed at a greater height.

13. Washing and separating group according to any one of claims 10 to 12, further comprising a second pump unit (8) to extract from said washing container (2) the plastics material (P) at the end of a washing and separating cycle to send said plastics material (P) to a subsequent treatment unit of the process line.

14. Washing and separating group according to any one of claims 10 to 13, further comprising a control unit (U_{C}) configured for driving and operationally coordinating the various parts (2, 3, 6, 4, 8) of said washing group (1) for operation according to a "batch" mode or according to a "continuous" mode".

15. Washing and separating group according to any one of claims 10 to 14, further comprising a third pump unit (9) for returning to said washing container (2) filtered washing fluid (W_{f}) coming from said filtering unit (Up).

16. Washing and separating group according to any one of claims 10 to 15, wherein said stirring means (6) comprises a rotation shaft (11) that extends longitudinally inside said washing container (2), and a plurality of distributed blades (12) protruding transversely from said rotation shaft (11).

17. Washing and separating plant for plastics material, comprising a plurality of washing groups (1A, 1B, 1C) according to any one of claims 10 to 16, placed in parallel to operate each in a "batch" mode, and to be supplied independently of one another with respective quantities (X_{A}, X_{B}, X_{C}) of plastics material to be processed and with washing fluid.

18. Washing and separating plant for plastics material, comprising a plurality of washing groups (1, 1', 1") according to any one of claims 10 to 16, placed together in a series arrangement to operate in "continuous" mode", each washing group having an inlet for the plastics material coming from the washing group located further upstream, and an outlet for supplying the plastics material that have just been processed to a further washing group placed further downstream, so as to define multiple cascaded washing and separating stages (ST, ST', ST") for the plastics material (P) to be treated.

## Patentansprüche

1. Verfahren zum Waschen und Trennen von Kunststoffmaterialteilen (P) - das von Behältern, Flaschen, Plastikfolien stammt - von kontaminierendem Material (C), umfassend die Schritte:
**a.** Zuführen der Kunststoffmaterialteile (P) mit dem kontaminierendem Material (C) und eines Waschfluides (W) in einen Waschbehälter (2);
**b.** Antreiben eines Flügelrührwerks (6), das im Waschbehälter (2) rotiert, um eine turbulente Rührwirkung im Waschfluid (W) zu erzeugen, um durch mechanische Wirkung eine erste Trennung (S1) des kontaminierenden Materials (C) vom Kunststoffmaterial (P) zu erzielen,
**c.** Entfernen aus dem Waschbehälter (2) einer Menge (Q) von Waschfluid (W), das Kunststoffmaterial (P) und Kontaminationsstoff (C) enthält, um die Menge (Q) zu einer zentrifugale Trenneinheit (3) zu schicken, die mit einem Rotor bereitgestellt ist, und
**d.** Aussetzen der Menge (Q), durch den Rotor, einer zentrifugalen mechanischen Wirkung, um durch mechanische Wirkung eine zweite Trennung (S2) von kontaminierendem Material (C) vom Kunststoffmaterial (P) zu erzielen, und einen ersten Anteil (F1), der aus Waschfluid und Kontaminationsstoffen besteht, von einem zweiten Anteil (F2), der im Wesentlichen Kunststoffmaterial (P) umfasst, zu trennen, und
**e.** Zurückführen des zweiten Anteils (F2) im Inneren des Waschbehälters (2), um das Kunststoffmaterial (P) einer weiteren turbulenten Rührwirkung auszusetzen, um jeglichen möglichen Kontaminationsstoff weiter zu trennen, der noch an den Kunststoffteilen anhaftet, und
**f.** Entleeren des ersten Anteils (F1) von Waschfluid und Kontaminationsstoffen (C), um den ersten Anteil (F1) von Waschfluid und Kontaminationsstoffen (C) einer Filterbehandlung auszusetzen, und
**f'.** periodisches Entleeren eines Anteils von zu beseitigenden schweren Kontaminationsstoffen, die sich an einem Boden (7) des Waschbehälters (2) absetzen, aus dem Waschbehälter (2).

2. Verfahren nach Anspruch 1, wobei der Schritt zum Entfernen c) Pumpen, durch eine erste Pumpeneinheit (4), der Menge (Q) entlang eines geschlossenen Umlaufkreislaufs (5) umfasst, der bei einer ersten Zone (Z1) des Waschbehälters (2) beginnt und sich erstreckt, bis er zu einer zweiten Zone (Z2) im Waschbehälter (2) zurückkehrt.

3. Verfahren nach Anspruch 1 oder 2, wobei Schritt c) zum Pumpen und Umlaufen von Kunststoffmaterial (P) im Inneren des Waschbehälters (2) während des Wasch- und Trennzyklus konstant in einem fortlaufenden Modus stattfindet.

4. Verfahren nach einem der vorstehenden Ansprüche, wobei das Waschfluid (W), das von der Filterbehandlung des ersten Anteils (F1) erhalten wird, zum Waschbehälter (2) zurückgeführt wird.

5. Verfahren nach einem der vorstehenden Ansprüche, wobei der Schritt zum Zuführen a) durch Einleiten einer eingestellten Menge von zu verarbeitendem Kunststoffmaterial in einem "Chargen"-Modus stattfindet und wobei die Schritte von b) bis f) fortlaufend für eine eingestellte Zeitdauer (T) durchgeführt werden, die gemäß dem Grad an Reinheit und Dekontamination des Kunststoffmaterials (P), der gewünscht wird, erhalten zu werden, eingestellt ist.

6. Verfahren nach Anspruch 5, wobei nach der eingestellten Zeitdauer (T) g) Extrahieren des Kunststoffmaterials (P) und Waschfluides (W) durch eine zweite Pumpeneinheit (8) aus dem Waschbehälter (2) und Schicken des Waschfluides (W) und Kunststoffmaterials (P) zu einer nachfolgenden Behandlungseinheit der Prozesslinie bereitgestellt sind.

7. Verfahren nach einem der vorstehenden Ansprüche, wobei eine Vielzahl von Waschgruppen (1A, 1B, 1C, ..1N) bereitgestellt ist, um getrennt im "Chargen"-Modus mit jeweiligen Mengen von kontaminiertem Kunststoffmaterial und Waschfluid zugeführt zu werden, und gleichzeitig die Wasch- und Trennzyklen der jeweiligen Mengen von Kunststoffmaterial parallel zueinander durchgeführt werden.

8. Verfahren nach einem der Ansprüche 1 bis 4, wobei der Schritt zum Zuführen a) in einem "fortlaufenden" Modus stattfindet, um einen Fluss von zu verarbeitendem Kunststoffmaterial und Waschfluid konstant einzuleiten, fortlaufend die Schritte von b) bis f) durchführend und fortlaufend durch eine zweite Pumpeneinheit (8) das Kunststoffmaterial (P) und Waschfluid (W) vom Waschbehälter (2) extrahierend, um das Kunststoffmaterial (P) und Waschfluid (W) zu einer nachfolgenden Behandlungseinheit der Prozesslinie zu schicken.

9. Verfahren nach Anspruch 8, wobei bereitgestellt ist, eine Vielzahl von Waschgruppen (1, 1', 1", ..), die im "fortlaufenden" Modus arbeiten, in Reihe anzuordnen, wobei das Waschfluid (W) gemeinsam mit dem verarbeiteten Kunststoffmaterial (P), das aus einer Waschgruppe austritt, in eine weitere Waschgruppe fließt, die weiter stromabwärts liegt und so weiter, um das Kunststoffmaterial (P) einigen Wasch- und Trennstufen (ST, ST', ST") auszusetzen, die in einer Kaskade platziert sind.

10. Wasch- und Trenngruppe (1) für Kunststoffteile, die von Behältern, Flaschen und Kunststofffolien stammen, umfassend:
- einen Waschbehälter (2), der zum Aufnehmen von Kunststoffmaterialteilen (P) mit kontaminierende Material (C) und einem Waschfluid (W) geeignet ist,
- Rührmittel (6), die im Waschbehälter (2) angeordnet und geeignet sind, im Waschfluid (W) eine turbulente Rührwirkung zum Trennen des kontaminierenden Materials (C) vom Kunststoffmaterial (P) durch mechanische Wirkung zu erzeugen,
- einen Umlaufkreislauf (5), der konfiguriert ist, vom Waschbehälter (2) eine Menge (Q) von Waschfluid zu entfernen, das Kunststoffmaterial (P) und Kontaminationsstoff (C) enthält, und
- eine zentrifugale Trenneinheit (3), die mit einem Rotor bereitgestellt, entlang des Umlaufkreislaufs (5) angeordnet und geeignet ist, durch mechanische Wirkung durch den Rotor das kontaminierende Material (C) vom Kunststoffmaterial (P) zu entfernen und einen ersten Anteil (F1), der aus Waschfluid (W) und Kontaminationsstoffen (C) zusammengesetzt ist, von einem zweiten Anteil (F2), der im Wesentlichen Kunststoffmaterial (P) umfasst, zu trennen,
wobei
die zentrifugale Trenneinheit (3) einen ersten Auslass (U1), der zum Zurückführen des zweiten Anteils (F2) im Inneren des Waschbehälters (2) angeordnet ist, um das Kunststoffmaterial (P) einer weiteren turbulenten Rührwirkung auszusetzen, um weiter jeglichen möglichen Kontaminationsstoff (C) vom Plastikmaterial (P) zu trennen, der noch daran anhaftet,
- die zentrifugale Trenneinheit (3) einen zweiten Auslass (U2) umfasst, der zum Entleeren des ersten Anteils (F1) von Waschfluid (W) und Kontaminationsstoffen (C) zu einer Filtereinheit (U_{F}) angeordnet ist,
- Ventilmittel (10), die nahe einer Bodenzone (7) des Waschbehälters (2) bereitgestellt und angeordnet sind, die zu beseitigenden schweren Kontaminationsstoffe zu entleeren, die sich in der Bodenzone (7) absetzen.

11. Wasch- und Trenngruppe für Kunststoff nach Anspruch 10, umfassend eine erste Pumpeneinheit (4), die zum Entfernen aus einer ersten Zone (Z1) des Waschbehälters (2) von Waschfluid (W), das mit dem Kunststoffmaterial (P) und möglichem Kontaminationsstoff (C) kombiniert ist, geeignet ist, um das Waschfluid (W), das mit Kunststoffmaterial kombiniert ist, im geschlossenen Umlaufkreislauf (5) zur zentrifugalen Trenneinheit (3) zu pumpen.

12. Wasch- und Trenngruppe nach Anspruch 11, wobei der erste Auslass (U1) der zentrifugalen Trenneinheit (3) in den Waschbehälter (2) in einer zweiten Zone (Z2) führt, die von der ersten Zone (Z1) beabstandet und bei einer größeren Höhe platziert ist.

13. Wasch- und Trenngruppe nach einem der Ansprüche 10 bis 12, weiter umfassend eine zweite Pumpeneinheit (8), um das Kunststoffmaterial (P) am Ende eines Wasch- und Trennzyklus aus dem Waschbehälter (2) zu extrahieren, um das Kunststoffmaterial (P) an eine nachfolgende Behandlungseinheit der Prozesslinie zu schicken.

14. Wasch- und Trenngruppe nach einem der Ansprüche 10 bis 13, weiter umfassend eine Steuereinheit (U_{C}), die konfiguriert ist, die unterschiedlichen Teile (2, 3, 6, 4, 8) der Waschgruppe (1) für Betrieb gemäß einem "Chargen"-Modus oder gemäß einem "fortlaufenden" Modus" anzutreiben und betriebstechnisch zu koordinieren.

15. Wasch- und Trenngruppe nach einem der Ansprüche 10 bis 14, weiter umfassend eine dritte Pumpeneinheit (9) zum Zurückführen von gefiltertem Waschfluid (W_{f}), das von der Filtereinheit (U_{F}) kommt, zum Waschbehälter (2).

16. Wasch- und Trenngruppe nach einem der Ansprüche 10 bis 15, wobei die Rührmittel (6) eine Drehwelle (11), die sich längs innerhalb des Waschbehälters (2) erstreckt, und eine Vielzahl verteilter Flügel (12), die quer von der Drehwelle (11) vorstehen, umfassen.

17. Wasch- und Trennanlage für Kunststoffmaterial, umfassend eine Vielzahl von Waschgruppen (1A, 1B, 1C) nach einem der Ansprüche 10 bis 16, die parallel platziert sind, um jeweils in einem "Chargen"-Modus zu arbeiten und unabhängig voneinander in Bezug auf Mengen (X_{A}, X_{B}, X_{C}) von zu verarbeitendem Kunststoffmaterial und mit Waschfluid zugeführt zu werden.

18. Wasch- und Trennanlage für Kunststoffmaterial, umfassend eine Vielzahl von Waschgruppen (1, 1', 1") nach einem der Ansprüche 10 bis 16, die gemeinsam in einer Reihenanordnung platziert sind, um im "fortlaufenden" Modus" zu arbeiten, wobei jede Waschgruppe einen Einlass für das Kunststoffmaterial aufweist, das von der Waschgruppe kommt, die weiter stromaufwärts liegt, und einen Auslass zum Zuführen des Kunststoffmaterials, das gerade verarbeitet wurde, zu einer weiteren Waschgruppe zuzuführen, die weiter stromabwärts liegt, um mehrere kaskadierte Wasch- und Trennstufen (ST, ST', ST") für das zu behandelnde Kunststoffmaterial (P) zu definieren.

## Revendications

1. Procédé pour laver et séparer des morceaux d'une matière plastique (P) - provenant de récipients, de bouteilles et de films en plastique - d'un matériau contaminant (C), comprenant les étapes suivantes :
a) la fourniture des morceaux de matière plastique (P) avec le matériau contaminant (C) et un liquide de lavage (W) dans un récipient de lavage (2) ;
b) l'entraînement d'un agitateur à lame (6) tournant dans ledit récipient de lavage (2), pour générer dans le liquide de lavage (W) une action d'agitation turbulente pour obtenir une première séparation (S1), au travers d'une action mécanique, du matériau contaminant (C) de la matière plastique (P),
c) le retrait dudit récipient de lavage (2) d'une quantité (Q) de liquide de lavage (W) contenant de la matière plastique (P) et du contaminant (C) pour envoyer ladite quantité (Q) vers une unité de séparation centrifuge (3) pourvue d'un rotor, et
d) la soumission de ladite quantité (Q), par ledit rotor, à une action mécanique centrifuge pour obtenir une seconde séparation (S2), au travers d'une action mécanique, du matériau contaminant (C) de ladite matière plastique (P), et pour séparer une première fraction (F1) constituée de liquide de lavage et de contaminants, d'une seconde fraction (F2) comprenant sensiblement de la matière plastique (P), et
e) le renvoi à l'intérieur dudit récipient de lavage (2) de ladite seconde fraction (F2) pour soumettre ladite matière plastique (P) à une autre action d'agitation turbulente de manière à continuer de séparer un éventuel contaminant collant encore au plastique, et
f) l'évacuation de ladite première fraction (F1) de liquide de lavage et de contaminants (C) pour soumettre ladite première fraction (F1) de liquide de lavage et de contaminants (C) à un traitement de filtrage, et
f') l'évacuation périodique dudit récipient de lavage (2) d'une fraction de contaminants lourds à éliminer qui se déposent sur un fond (7) dudit récipient de lavage (2).

2. Procédé selon la revendication 1, dans lequel ladite étape de retrait c) comprend le pompage, par une première unité formant pompe (4), de ladite quantité (Q) le long d'un circuit de recirculation fermé (5), qui démarre à partir d'une première zone (Z1) dudit récipient de lavage (2) et s'étend jusqu'à ce qu'il revienne dans une seconde zone (Z2) dudit récipient de lavage (2).

3. Procédé selon la revendication 1 ou 2, dans lequel ladite étape c) de pompage et de recirculation de matière plastique (P) à l'intérieur dudit récipient de lavage (2) se déroule en permanence dans un mode continu durant le cycle de lavage et de séparation.

4. Procédé selon une quelconque revendication précédente, dans lequel le liquide de lavage (W), obtenu à partir du traitement de filtrage de ladite première fraction (F1), est renvoyé dans ledit récipient de lavage (2).

5. Procédé selon une quelconque revendication précédente, dans lequel ladite étape de fourniture a) se déroule en mode « discontinu », par introduction d'une quantité définie de matière plastique à traiter, et dans lequel lesdites étapes de b) à f) sont effectuées de façon continue pendant une durée définie (T), définie en fonction du degré de pureté et de décontamination de la matière plastique (P) qu'il est souhaitable d'obtenir.

6. Procédé selon la revendication 5, dans lequel après ladite durée définie (T), il est prévu g) l'extraction de la matière plastique (P) et du liquide de lavage (W) par une deuxième unité formant pompe (8) à partir dudit récipient de lavage (2) et l'envoi desdits liquide de lavage (W) et matière plastique (P) vers une unité de traitement suivante de la ligne de procédé.

7. Procédé selon une quelconque revendication précédente, dans lequel une pluralité de groupes de lavage (1A, 1B, 1C, .., 1N) est prévue pour se voir fournir séparément, en mode « discontinu », des quantités respectives de matière plastique contaminée et du liquide de lavage, et effectuer simultanément les cycles de lavage et de séparation en parallèle desdites quantités respectives de matière plastique.

8. Procédé selon l'une quelconque des revendications 1 à 4, dans lequel ladite étape de fourniture a) se déroule en mode « continu », en introduisant en permanence un flux de matière plastique à traiter et de liquide de lavage, en effectuant de façon continue lesdites étapes de b) à f), et en extrayant de façon continue, par une deuxième unité formant pompe (8), la matière plastique (P) et le liquide de lavage (W) dudit récipient de lavage (2) pour envoyer la matière plastique (P) et le liquide de lavage (W) vers une unité de traitement suivante de la ligne de procédé.

9. Procédé selon la revendication 8, dans lequel il est prévu d'agencer en série une pluralité de groupes de lavage (1, 1', 1", ..) fonctionnant en mode « continu », dans lequel le liquide de lavage (W) conjointement avec la matière plastique traitée (P) sortant d'un groupe de lavage, s'écoule dans un autre groupe de lavage situé plus en aval, et ainsi de suite, de manière à soumettre ladite matière plastique (P) à plusieurs étages de lavage et de séparation (ST, ST', ST") placés en cascade.

10. Groupe de lavage et de séparation (1) pour morceaux de plastique provenant de récipients, de bouteilles et de films en plastique, comprenant :
- un récipient de lavage (2) apte à recevoir des morceaux de matière plastique (P) avec un matériau contaminant (C) et un liquide de lavage (W),
- un moyen d'agitation (6) agencé dans ledit récipient de lavage (2) et apte à générer dans le liquide de lavage (W) une action d'agitation turbulente pour séparer au travers d'une action mécanique le matériau contaminant (C) de ladite matière plastique (P),
- un circuit de recirculation (5) configuré pour retirer, dudit récipient de lavage (2), une quantité (Q) de liquide de lavage contenant une matière plastique (P) et un contaminant (C), et
- une unité de séparation centrifuge (3) pourvue d'un rotor, agencée le long dudit circuit de recirculation (5) et apte à retirer, au travers d'une action mécanique par ledit rotor, le matériau contaminant (C) de la matière plastique (P) et à séparer une première fraction (F1) composée de liquide de lavage (W) et de contaminants (C), d'une seconde fraction (F2) comprenant sensiblement de la matière plastique (P),
dans lequel
ladite unité de séparation centrifuge (3) comprend une première sortie (U1) agencée de manière à renvoyer à l'intérieur dudit récipient de lavage (2) ladite seconde fraction (F2) pour soumettre ladite matière plastique (P) à une autre action d'agitation turbulente de manière à continuer de séparer de la matière plastique (P) un éventuel contaminant (C) adhérant encore à celle-ci,
- ladite unité de séparation centrifuge (3) comprenant une seconde sortie (U2) agencée de manière à évacuer ladite première fraction (F1) de liquide de lavage (W) et de contaminants (C) vers une unité de filtrage (U_{F}),
- un moyen formant soupape (10) étant prévu à proximité d'une zone de fond (7) dudit récipient de lavage (2) et agencé de manière à évacuer périodiquement les contaminants plus lourds à éliminer qui se déposent dans ladite zone de fond (7).

11. Groupe de lavage et de séparation pour plastiques selon la revendication 10, comprenant une première unité formant pompe (4) apte à retirer, d'une première zone (Z1) dudit récipient de lavage (2), du liquide de lavage (W) mélangé à de la matière plastique (P) et un éventuel contaminant (C) pour injecter ledit liquide de lavage (W) mélangé à de la matière plastique, dans ledit circuit de recirculation fermé (5), dans ladite unité de séparation centrifuge (3).

12. Groupe de lavage et de séparation selon la revendication 11, dans lequel ladite première sortie (U1) de ladite unité de séparation centrifuge (3) conduit dans ledit récipient de lavage (2) dans une seconde zone (Z2) éloignée de ladite première zone (Z1) et placée à une hauteur supérieure.

13. Groupe de lavage et de séparation selon l'une quelconque des revendications 10 à 12, comprenant en outre une deuxième unité formant pompe (8) pour extraire dudit récipient de lavage (2) la matière plastique (P) à la fin d'un cycle de lavage et de séparation pour envoyer ladite matière plastique (P) vers une unité de traitement suivante de la ligne de procédé.

14. Groupe de lavage et de séparation selon l'une quelconque des revendications 10 à 13, comprenant en outre une unité de commande (U_{C}) configurée pour entraîner et coordonner fonctionnellement les divers éléments (2, 3, 6, 4, 8) dudit groupe de lavage (1) pour un fonctionnement selon un mode « discontinu » ou selon un mode « continu ».

15. Groupe de lavage et de séparation selon l'une quelconque des revendications 10 à 14, comprenant en outre une troisième unité formant pompe (9) pour renvoyer dans ledit récipient de lavage (2) du liquide de lavage filtré (W_{f}) provenant de ladite unité de filtrage (U_{F}).

16. Groupe de lavage et de séparation selon l'une quelconque des revendications 10 à 15, dans lequel ledit moyen d'agitation (6) comprend un arbre de rotation (11) qui s'étend longitudinalement à l'intérieur dudit récipient de lavage (2), et une pluralité de lames distribuées (12) faisant saillie transversalement à partir dudit arbre de rotation (11).

17. Groupe de lavage et de séparation pour matière plastique, comprenant une pluralité de groupes de lavage (1A, 1B, 1C) selon l'une quelconque des revendications 10 à 16, placés en parallèle pour fonctionner chacun dans un mode « discontinu », et pour se voir fournir indépendamment les uns des autres des quantités respectives (X_{A}, X_{B}, X_{C}) de matière plastique à traiter et du liquide de lavage.

18. Installation de lavage et de séparation pour matière plastique, comprenant une pluralité de groupes de lavage (1, 1', 1") selon l'une quelconque des revendications 10 à 16, placés ensemble dans un agencement en série pour fonctionner en mode « continu », chaque groupe de lavage comportant une entrée pour la matière plastique provenant du groupe de lavage situé plus en amont, et une sortie pour fournir la matière plastique qui vient d'être traitée à un autre groupe de lavage placé plus en aval, de manière à définir plusieurs étages de lavage et de séparation en cascade (ST, ST', ST") pour la matière plastique (P) à traiter.
